# EUROPEAN PATENT APPLICATION

(11) **EP 2 575 371 A1**
(43) Date of publication of application: **03.04.2013**
(21) Application number: 11290445.3
(22) Date of filing: 29.09.2011
(51) Int. Cl.: H04N 21/43, H04N 5/00, H04N 17/00, H04N 5/04

(54) **Method and measurement system for evaluating a delay between audio and video signals in an audio/video stream**

(71) Applicant: Alcatel Lucent, 75007 Paris (FR)
(72) Inventor: Schneider, Patrick, 8005 Zürich (CH)
(74) Representative: Michalski Hüttermann & Partner Patentanwälte

(57) **Abstract**

The present invention relates to a method for evaluating a delay between an audio signal and a video signal in an audio/video stream delivery chain (40) comprising the steps of providing a calibration audio/video stream with synchronization signals within the audio signal and the video signal, transmitting the calibration audio/video stream through the audio/video stream delivery chain (40), receiving the calibration audio/video stream and calculating a time delay value of the synchronization signals within the audio signal and the video signal of the received audio/video stream. The present invention further relates to a measurement system for evaluating a delay between an audio signal and a video signal in an audio/video stream delivery chain (40) comprising a calibration audio/video stream generator (1, 3) for providing a calibration audio/video stream with synchronization signals within the audio signal and the video signal, connected to the audio/video stream delivery chain (40), an evaluation unit (2), connected to the audio/video stream delivery chain (40), for receiving the calibration audio/video stream and calculating a time delay value of the synchronization signals within the audio signal and the video signal of the received audio/video stream, whereby the measurement system is adapted to perform the above method.

## Description

The present invention relates to a method for evaluating a delay between an audio signal and a video signal in an audio/video stream delivery chain. The present invention further relates to a measurement system for evaluating a delay between an audio signal and a video signal in an audio/video stream delivery chain.

In the area of audio/video streaming, lip-synchronization is an important issue. Lip-synchronization is lost, when a time delay between the audio signal and the video signal occurs. Loss of lip-synchronization can annoy a viewer of the audio/video stream and can even lead to subconscious viewer's stress. This results in low acceptance of services provided via audio/video streaming. To promote audio/video streaming, it is therefore required to provide the audio/video stream at a viewer with synchronized audio and video signals. Allowed values for delays between audio and video signal have for example been defined in the norms EBU R37, allowing an End-to-End delay of [+40ms] to [-60ms] known as the undetectable plateau and used as transport recommendation for contribution and service providers. The ITU-R BT.1359 recommendation is specified by the detectable plateau at the viewer side with delays generally from [+45ms] to [-125ms], and with a maximum acceptability delay for IPTV between [+90ms] to [-185ms]. A positive delay [+] is defined as the audio signal (sound) being advanced to video (SaV), also known as "audio leads video". The contrary situation is known as "audio lags video".

Audio/video streaming is used for example for services like IPTV, which refers to a live television service provided via an IP-network (Multicast - RTP/UDP), or video on demand (VoD) services, which refers to provisioning of an audio/video stream to a particular user (Unicast - HTTP/TCP). These services are provided via a TV-chain or VoD-chain, respectively, comprising several components, each of which can delay audio and/or video signals of the audio/video stream differently and independent from each other. These components typically include encoding of the video signal and/or the audio signal, processing steps of the audio/video stream and/or the transport of the audio/video stream. Therefore, at the end of the chain, also referred to as sink, the audio and video signals of the audio/video stream can be out of synchronization.

To provide a synchronized audio/video stream with synchronized audio and video signals at the sink, it is for example known to add additional proprietary test-pattern data to the audio/video stream, i.e. an additional synchronization stream that cannot be used from End-to-End in the respective chains. Since this proprietary digital data is processed and transmitted independently from the audio and video signals, improvements in the lip synchronization are not sufficient to provide the audio/video stream service to a user with an acceptable delay between the audio and the video signal. This approach is not suitable for detection of systematic delays caused in an audio/video IP stream delivery chain until it reaches the output of an IPTV Set-top-box and TV System or a Personal Computer system.

It is therefore an object of the present invention to provide a method and a measurement system for evaluating a delay between an audio signal and a video signal in an audio/video stream delivery chain with high accuracy and which are suitable for compensation or calibration of the audio/video stream delivery chain.

This object is achieved by the independent claims. Advantageous embodiments are given in the dependent claims.

In particular, the present invention provides a method for evaluating a delay between an audio signal and a video signal in an audio/video stream delivery chain comprising the steps of providing a calibration audio/video stream with synchronization signals in the form of real end user content within the audio signal and the video signal, transmitting the calibration audio/video stream through the audio/video stream delivery chain, receiving the calibration audio/video stream and calculating a time delay value of the synchronization signals within the audio signal and the video signal of the received audio/video stream.

The present invention also provides a measurement system for evaluating a delay between an audio signal and a video signal in an audio/video stream delivery chain comprising a calibration audio/video stream generator for providing a calibration audio/video stream with synchronization signals within the audio signal and the video signal, connectable to the audio/video stream delivery chain, an evaluation unit, connectable to the audio/video stream delivery chain, for receiving the calibration audio/video stream and calculating a time delay value of the synchronization signals within the audio signal and the video signal of the received audio/video stream, whereby the measurement system is adapted to perform the above method.

Basic idea of the invention is to provide the synchronization signals within the audio signal and the video signal and to calculate the time delay value based on the time difference of the synchronization signals. Accordingly, a delay between the audio and the video signal can be evaluated over the entire delivery chain. The delivery chain can be any delivery chain in an overall TV-chain from the creation of audio and video signals to a user who is consuming the audio and video signals. The audio/video stream delivery chain refers to the part of a End-to-End live TV-chain or VoD IPTV-chain, which is accessible e.g. by an IPTV-provider, and has to be provided to a consumer with a synchronized audio and video signal. The calibration audio/video stream is introduced at the beginning of the audio/video delivery chain, and the received audio/video stream is evaluated in respect to a delay of the audio and the video signal. The audio/video stream delivery chain can also be provided to multiple consumers. Accordingly, the step of calculating the time delay value preferably comprises calculating the time delay at different end points of the audio/video delivery chain and calculating the time delay value under consideration of individual time delays at the different end points. Preferably, the time delay value is a mean value of the individual time delays. The calculation of the time delay value is highly accurate, since it is based directly on the audio and video signals, which are transmitted in the audio/video stream. Accordingly, the calculation is independent from separate signals, which are transmitted via the delivery chain and underlie separate delays. Preferably, the synchronization signals are provided periodically in the audio and video signal. Since with the introduction of the audio bit stream format Dolby AC3 which sometimes needs to be pass-through routed inside some parts of the delivery chain, and with complex encoding and decoding processes in IPTV setups, delays between the audio and video signal can reach up to +190ms/-490ms. Therefore it is preferred to add the synchronization signals in intervals of at least 1 s to avoid misinterpretation of the synchronization signals. Preferably, the synchronization signals are transmitted every 5 to 30 seconds, even more preferably approximately every 10 seconds. The smaller the interval is chosen, the more measurements can be performed in a given time. Since the calculation of the time delay value is directly based on the audio and video signal, it is important that any kind of processing of the audio and the video signal within the calibration audio/video stream generator does not cause a delay between the synchronization signals of the audio and video signal. Also at the evaluation unit, possible internal time delays have to be considered. With the time delay value calculated at the stream sink, the delivery chain can be adjusted so that the audio and the video signal will be received at the stream sink well-synchronized, although this might imply delaying the audio and/or the video signal to be out of sync at any place within the delivery chain. Preferably, this adjustment is performed in an encoding step of the audio/video stream delivery chain. Methods and apparatuses for delaying audio and/or video signals of an audio/video stream are known in the art.

In a preferred embodiment the step of providing a calibration audio/video stream with synchronization signals within the audio signal and the video signal comprises providing an analog audio signal and an analog video signal, providing the synchronization signals to the analog audio signal and the analog video signal, and converting the analog audio signal and the analog video signal containing the synchronization signals into a digital audio signal and a digital video signal. The analog audio and video signal is provided at a very early stage of the live TV-chain or VoD IPTV-chain, so that a major part of the respective chain can be taken as audio/video stream delivery chain and can be evaluated in respect to a delay between the audio and video signal. For example, the synchronization signals can be provided by replacing part of a respective input signal by the calibration audio/video stream generator, or by adding the synchronization signals as an overlay. Adding synchronization signals to analog audio and video signals is a task that can be performed with known audio/video compositing equipment.

In a preferred embodiment the step of receiving the calibration audio/video stream comprises converting the calibration audio/video stream into an analog audio signal and an analog video signal, and the step of calculating a time delay value of the synchronization signals comprises calculating the time delay value of the synchronization signals within the analog audio signal and the analog video signal. Similar to provisioning the synchronization signals, also the detection of the synchronization signals in the analog audio and video signal can be easily performed. Additionally, the live TV-chain or VoD IPTV-chain frequently comprises as last component for a conversion of the audio/video stream into analog audio and video signals, so that the audio/video stream delivery chain can be evaluated in respect to delays of the audio and video signal, e.g. when the audio/video stream is converted into an analog video signal and an analog audio signal.

In a preferred embodiment the step of providing a calibration audio/video stream with synchronization signals within the audio signal comprises adding sound identification pulses to the audio signal. Sound identification pulses can be easily created and added to the calibration audio/video stream. Preferably, the identification pulses have a defined signal level and/or pulse duration, which facilitates the detection of the identification pulses. In a further preferred embodiment, each individual synchronization signal comprises a set of individual sound identification pulses, which together form the synchronization signal. Such a synchronization signal can be easily and exactly detected, even in the presence of background noise or any other audio content of the calibration audio/video stream.

In a preferred embodiment the step of providing a calibration audio/video stream with synchronization signals within the video signal comprises adding flashes to the video signal. The flashes refer to any kind of video signal, which provides a strongly visible signal for a short time. The flash can be of any color, e.g. white or black, or any color combination thereof. Preferably, the flash is of multiple colors, e.g. a white part and a black part. Further, the flash can be provided over an entire screen when displayed on a video screen, or only a part thereof. Preferably, the flash has a uniform appearance over a given part of the screen.

In a preferred embodiment the step of adding flashes to the video signal comprises adding flashes to a predefined set of lines of the video signal. In common European video standards, a video signal is commonly provided with a frequency of 50 Hz, so that an entire interlaced PAL frame screen is transmitted every 40 ms (Full Frame) with two interlaced fields of 20 ms each, respectively. Hence, synchronization based on entire screens of the audio/video stream has a maximum accuracy of the afore-mentioned 20 ms. In comparison, the accuracy based on a single line of the video signal is much higher, depending on the number of lines of the video signal. For instance, a PAL-signal is provided with 625 lines (576i lines visible) at 25 frames including 50 fields per second, generating a new line signal every 64µs, which is for this type of signal a theoretical maximum accuracy of the evaluation of the delay between the audio and video signal. The flashes can be added to the entire lines, or to a part of the lines. The number of lines forming the set of lines can be freely chosen. Preferably, the flashes are added to the same part of the lines for the entire set of lines, e.g. forming a rectangular flash.

In a preferred embodiment the step of adding flashes to a predefined set of lines of the video signal comprises adding enclosing signals, which are distinct from the flashes, within an area surrounding the flash. The enclosing signals can be any kind of signals, which are easily distinguishable from the flash. Accordingly, the enclosing signals depend on the chosen kind of flash. By way of example, the enclosing signal can be black and the flash can be white, forming a pulse sequence of white/black/white signals. The enclosing signal can refer to entire lines around the set of lines containing the flash, whereby the number of lines can be freely chosen. Also, the enclosing signals can be provided within the set of lines, when the flashes only cover part of the lines of the set of lines forming the flash.

In a preferred embodiment the step of providing a calibration audio/video stream with synchronization signals within the audio signal and the video signal comprises providing any audio and video input signal and adding synchronization signals to the audio signal and the video signal. Since the processing of the audio/video stream within the audio/video stream delivery chain may depend on the contents of the audio/video stream, e.g. video sequences with frequent changes between subsequent frames may require more processing time than a video sequence with a constant image, the time delay can be evaluated for any kind of audio and video signals. Furthermore, the measurement system can be introduced within any kind of live TV-chain or VoD IPTV-chain to evaluate the delay between the audio and video signal in real operation.

In a preferred embodiment the step of providing a calibration audio/video stream with synchronization signals within the audio signal and the video signal comprises reproducing a pre-recorded calibration audio/video stream. Reproducing the pre-recorded calibration audio/video stream facilitates the provisioning of this stream, since the generation of the calibration audio/video stream is relatively complex compared to reproducing the pre-recorded calibration audio/video stream. It is merely required that reproducing the pre-recorded audio/video stream does not cause a delay between the audio and video signal of the calibration audio/video stream. In case the contents of the calibration audio/video stream influences the delay between the audio and video signal, the pre-recorded calibration audio/video stream allows a reliable reproduction of evaluation results of the time delay value, since the same audio/video stream can be used repeatedly.

In a preferred embodiment the step of providing a calibration audio/video stream with synchronization signals within the audio signal and the video signal comprises providing the calibration audio/video stream having at least two sequences, whereby each sequence has a different set of audio/video parameters. Processing of audio and video signals with different parameters can require more or less time, e.g. when audio/video streams with high data rates are transmitted or processed compared to audio/video streams having low data rates, thereby causing different delays between the audio and video signal. The time delay value is then calculated based on different time delays for the different sequences. Preferably, the time delay value is a mean value of the different time delays. Alternatively, the time delay value is weighted value, where different time delays have different impact on the calculated time delay value. For example, audio/video streams with parameters, which are frequently used, can have a higher weight compared to time delays of audio/video streams with rarely used parameters. Also time delays, which are rather unnatural, e.g. when the audio signal advances the video signal, can be weighted higher or more critical than time delays, which are more acceptable to users, i.e. when the audio signal has a delay compared to the video signal. Also other techniques can be applied for weighing the time delays.

In a preferred embodiment the step of providing a calibration audio/video stream with synchronization signals within the audio signal comprises performing a separate encoding of the audio signal containing the synchronization signal and delaying the video signal containing the synchronization signal by a delay caused by the separate audio encoding, and the step of calculating a time delay value of the synchronization signals within the audio signal and the video signal of the received audio/video stream comprises performing a separate decoding of the audio signal containing the synchronization signal, whereby the time delay value is calculated considering the delay caused by the audio decoding. This allows considering time delays, which occur due to different processing times of the audio and video signal, when the audio signal is separately coded. This refers for example to the use of different AC3-audio encoding/decoding formats or audio volume levelling processing, which are frequently used in audio/video streams. Similarly, also video processing steps, which are added before a final transport stream encapsulation, can cause individual time delays of the video signal. Nevertheless, the encoding of the audio signal in AC3-format and the video encoding compression are both time-consuming and usually cause a delay to the audio and video signal. By taking into account this delay, a calibration audio/video stream with the synchronization signal within the audio and video signal being synchronized can be provided. The same applies, when the audio signal is separately decoded at the end of the audio/video stream delivery chain.

In a preferred embodiment the step of calculating a time delay value of the synchronization signals within the audio signal and the video signal of the received audio/video stream comprises calculating and recording the time delay over a time interval and calculating the time delay value from the recorded time delays over the time interval. Accordingly, the time delay of the audio/video stream delivery chain can be monitored over the entire time interval and changes in the time delay can be detected. The time delay value can be provided as mean value of the different time delays within the time interval, or by weighing the different time delays according to their relevance. The time delay value can also be provided as a function over time, e.g. when due to different IP-network usage over a day different time delays occur.

The present invention further refers to a calibration audio/video stream generator for providing a calibration audio/video stream with synchronization signals within an audio signal and a video signal thereof, whereby the calibration audio/video stream generator is adapted to be connected to an audio/video stream delivery chain, and the calibration audio/video stream is provided to be received by an evaluation unit to calculate a time delay value of the synchronization signals within the audio signal and the video signal of the received audio/video stream.

The calibration audio/video stream generator for providing the calibration audio/video stream with the synchronization signals within the audio signal and the video signal is configured to execute one or more of the steps of the methods described above. The calibration audio/video stream generator comprises an impulse generator for adding the synchronization signals to an existing audio/video stream and providing this stream as calibration audio/video stream in the live TV-chain or the VoD IPTV-chain, or it comprises a video disc recorder for providing a pre-recorded calibration audio/video stream as playback.

The present invention further refers to an evaluation unit for receiving a calibration audio/video stream and calculating a time delay value of synchronization signals within an audio signal and a video signal thereof, whereby the evaluation unit is adapted to be connected to an audio/video stream delivery chain for receiving the calibration audio/video stream, and the calibration audio/video stream is providable by a calibration audio/video stream generator for providing the calibration audio/video stream with synchronization signals within the audio signal and the video signal, and transmittable through the audio/video stream delivery chain.

The evaluation unit for receiving a calibration audio/video stream and calculating a time delay value of the synchronization signals within the audio signal and the video signal is configured to execute one or more of the steps of the methods described above. The evaluation unit comprises a demultiplexer, which receives the calibration audio/video stream from the audio/video stream delivery chain, a PAL-encoder for encoding the received calibration audio/video stream, and a calculation unit, which is adapted to receive the video signal from the PAL-encoder and the audio signal. The calculation unit is configured for calculating a time delay between the synchronization signals of the video signal and the audio signal.

These and other aspects of the invention will be apparent from and elucidated with reference to the embodiments described hereinafter in respect to the drawings. In the drawings:
- Fig. 1: shows a schematic view of a calibration audio/video stream generator for providing a calibrated reference live TV audio/video stream with lip-synchronization signals according to a first embodiment,
- Fig. 2: shows a schematic view of an evaluation unit for calculating time delay value of the lip-synchronization signals generated within the audio signal and the video signal of the audio/video stream according to a first embodiment,
- Fig. 3: shows a schematic view of a calibration audio/video stream generator according to a second embodiment for providing a pre-recorded and software generated audio/video transport stream as calibrated reference VoD TV audio/video stream,
- Fig. 4: shows a schematic view of a live IPTV-chain comprising an audio/video stream delivery chain, and
- Fig. 5: shows a table of an exemplary software transport stream encoding setting used in the process according to the embodiment of Fig. 3,
- Fig. 6: shows a schematic view of a VoD IPTV-chain comprising an audio/video stream delivery chain,
- Fig. 7: shows a diagram of the analog PAL timing of the audio and video signals with added synchronization signals, and
- Fig. 8: shows a diagram of the SDI serial timing.

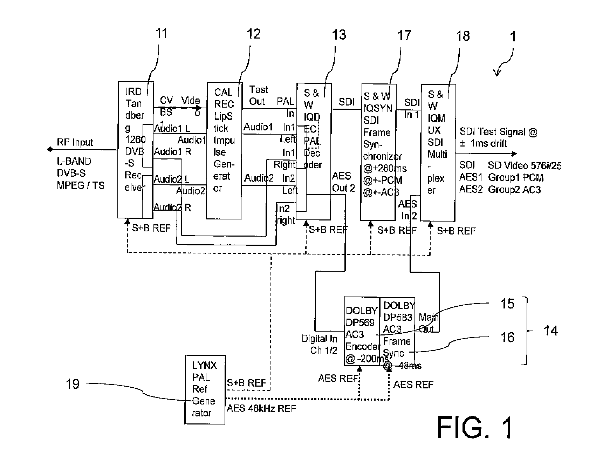

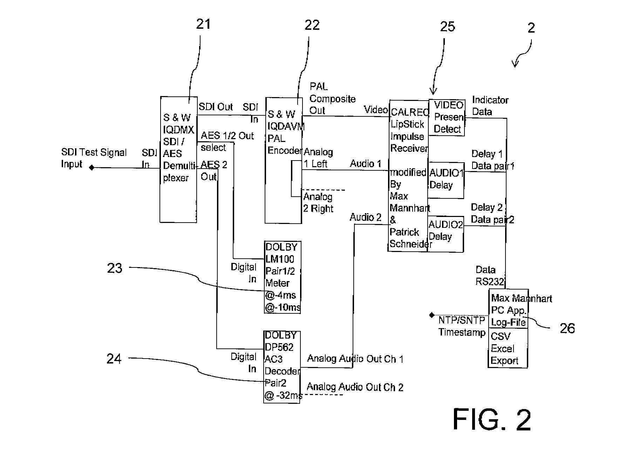

Figures 1 and 2 illustrate a measurement system for evaluating a delay between an audio signal and a video signal in a live audio/video stream delivery chain 40 according to a first embodiment. Particularly, Fig. 1 shows a live calibration audio/video stream generator 1 of the measurement system for generating a calibration audio/video stream with synchronization signals within a live TV audio/video stream. Fig. 2 shows an evaluation unit 2 of the measurement system for evaluating a delay between the audio signal and the video signal in the live TV audio/video stream.

The live calibration audio/video stream generator 1 comprises a receiver 11, which receives an audio and video signal as an RF-signal (Electromagnetic spectrum: L-Band, Decoding: MPEG/DVB-S or MPEG-TS/ASI Transport Stream). The receiver 11 in this embodiment is a professional receiver with high precision decoding oscillation and signal generation. The receiver 11 provides a high precision CVBS-coded analog PAL video signal and four individual analog audio signals, which are grouped into two pairs of stereo signal audio 1 and audio 2.

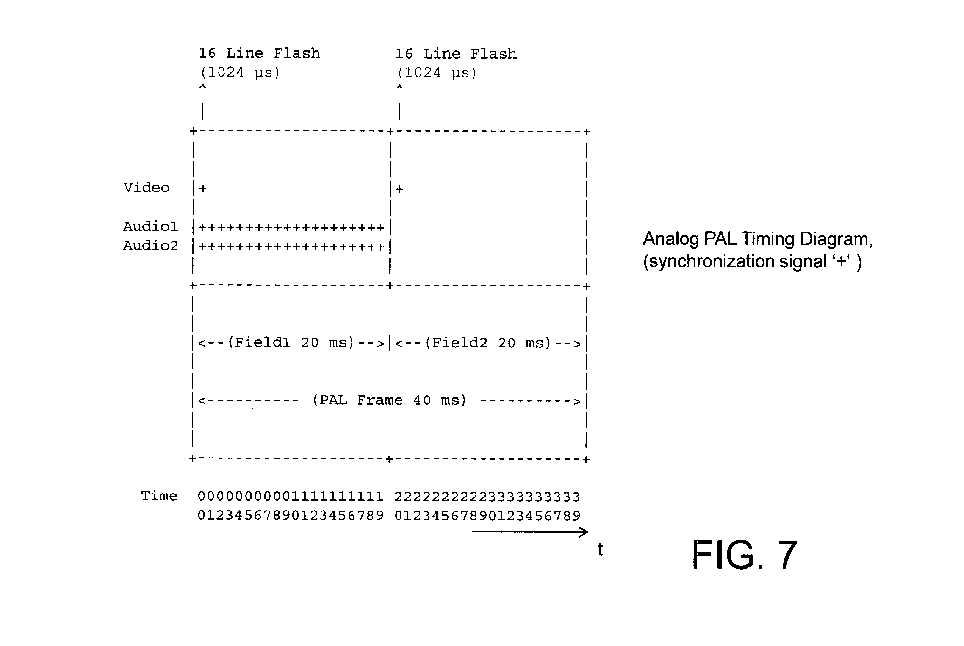

The calibration audio/video stream generator 1 further comprises an impulse generator 12, which receives the video signal and the left audio channels of two pairs of stereo signal audio 1 and audio 2 from the receiver 11. The impulse generator 12 adds every 10 seconds synchronization signals to the audio signal and the video signal. Particularly, the impulse generator 12 adds audible 7 kHz sine wave sound pulse triggers to each of the two left channel audio signals with a high precision and an exact length of 20ms (during 1 PAL field) to identify the corresponding trigger lip-synchronization first PAL fieldl duration. Furthermore, the impulse generator 12 adds white video flashes to a predefined set of lines of the video signal. In this embodiment the set of 16 visible video lines per PAL field are generated at the beginning of each PAL field. Additionally, black enclosing signals, which are distinct from the flashes, are provided within an area surrounding the flash. The enclosing signals are provided within the set of lines containing the synchronization signals, i.e. the flashes. The flashes only cover a part of each line, and the enclosing signals cover a part of the lines before and behind the part forming the flash. Enclosing and synchronisations signals form a white/black/white pulse sequence per active visible video line within 52µs, which provides a strongly visible signal. The full PAL line then includes the needed PAL-norm video line synchronization pulses FBAS and the composed active video line generated by generator 12 with a total length of 64µs. The full PAL frame (two fields interlaced) contains 32 composed lines in total, which are surrounded by the original video content or any provider specific test stress image. The number of pulse sequence lines per field has been chosen to be 16 lines or 1024µs (1ms) of total timing information to give an accuracy of +-1ms in relation to the highly precise synchronized audio identification trigger for the first fieldl-start and first fieldl-end of the full PAL frame. The timing of the signals is shown in Fig. 7 in detail.

The receiver 11 and the impulse generator 12 are synchronized, so that the impulse generator 12 generates the synchronization signals triggered by the receiver 11 PAL frame synchronization. At the beginning of each lip-synchronization marking field1, the audio pulse identification from the impulse generator 12 marks the audio during 20ms while the video signal CVBS provided by the receiver 11 will be marked during 16 lines (1ms) with exactly the same start field1 position and after 20ms at the start field2 position (End of field1).

The live calibration audio/video stream generator 1 further comprises a PAL-decoder 13, which receives from the impulse generator 12 the audio and video signals containing the synchronization signals. Additionally, the PAL-decoder 13 receives the audio channels, which are not provided from the receiver 11 to the impulse generator 12 as right inputs to complete Left and Right of each audio pair. The PAL-decoder 13 digitally serializes and converts the analog input signals to an SDI-stream (SMPTE-259M-C-1997/SMPTE-272M-A-1994) without shifting the lip-synchronization reference information provided by the impulse generator 12, which contains digital audio and video signals without any compression. Additionally, the PAL-decoder 13 provides an AES Out-2 (AES3-1992) audio output signal with the second audio pair (Audio 2).

The live calibration audio/video stream generator 1 further comprises an AC3-stage 14 comprising an AC3-encoder 15 and an AC3-framesynchronizer 16. The AC3-stage 14 performs any suitable Dolby reference AC3 encoding of the provided AES-signal with a predefined and stable fix delay of -200ms independent from any AC3 bandwidth or channel setting. To ensure the correct Dolby AC3 bit stream relationship between SDI-video and AC3 AES-Audio, the AC3-framesynchronizer 16 with a predefined stable and fix delay of -48ms is needed to synchronize the bit stream framing with the video AES timing, and causes an overall delay of - 248ms compared to the SDI-signal. The AC3-stage 14 provides as output a non drifting digital AC3-signal bit stream frame encapsulated into an AES compatible standard audio/video timeframe.

The live calibration audio/video stream generator 1 further comprises a SDI-frame synchronizer 17, which delays its SDI-input signal by the time required by the AC3-stage 14. The SDI frame synchronizer 17 provides the +280ms (7 Frame) delayed SDI-stream and the slightly delay adjusted audio signals as output signal.

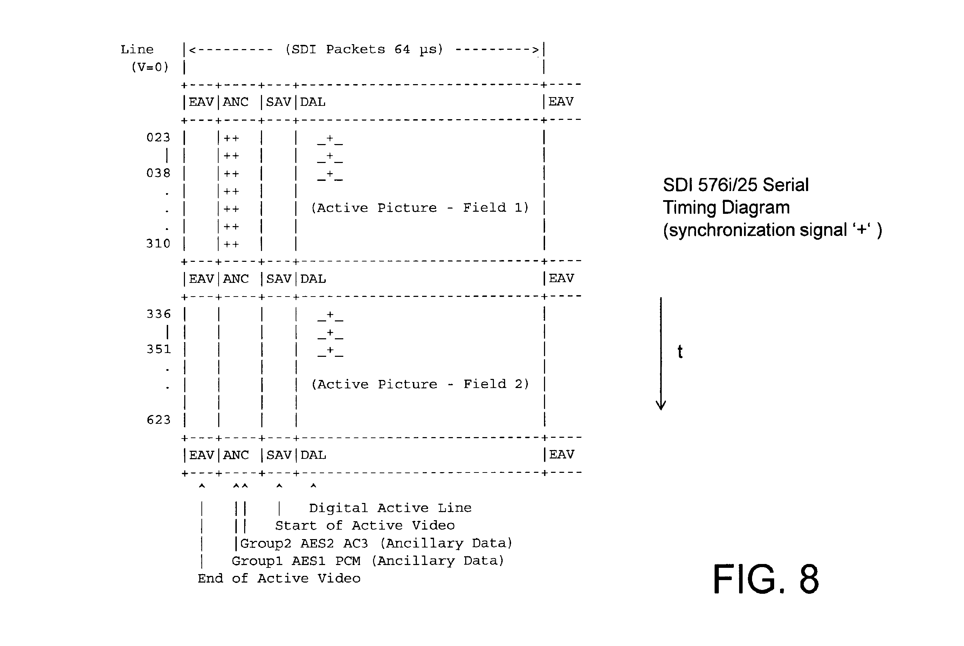

The calibration audio/video stream generator 1 further comprises a SDI-multiplexer 18, which receives the delayed SDI-signal and the AC3-signal as input. The SDI-multiplexer 18 multiplexes the signals and provides a SDI Test Signal stream containing the lip-synchronization audio 1 SDI Group1 AES1 pair1 with PCM audio, the lip-synchronization audio 2 SDI Group2 AES2 pair2 with a customized AC3-bitstream and the SDI video signal with the lip-synchronization signals. The detailed SDI serial timing is shown in Fig. 8.

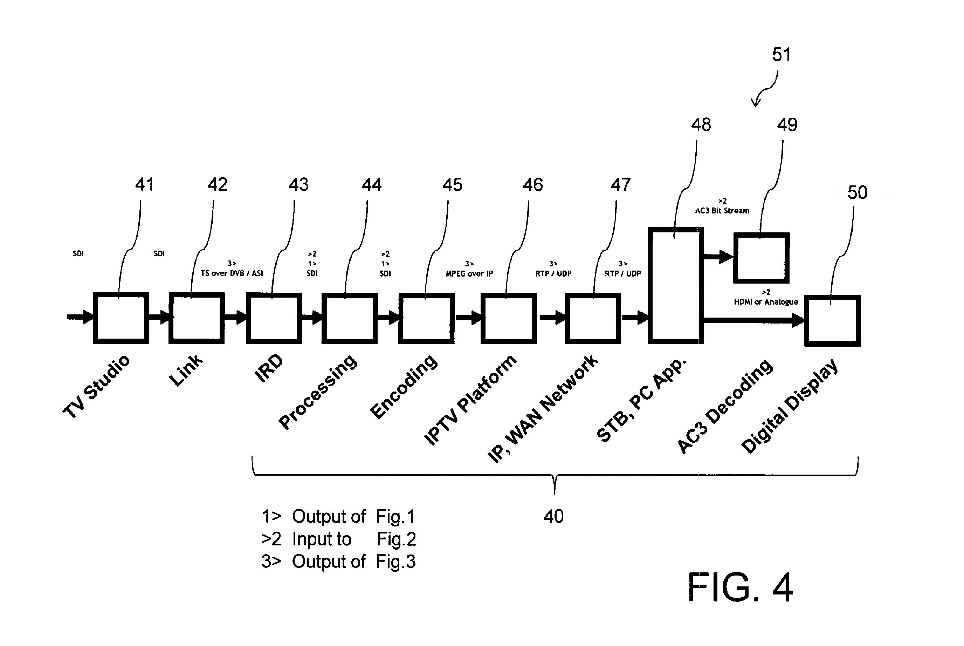

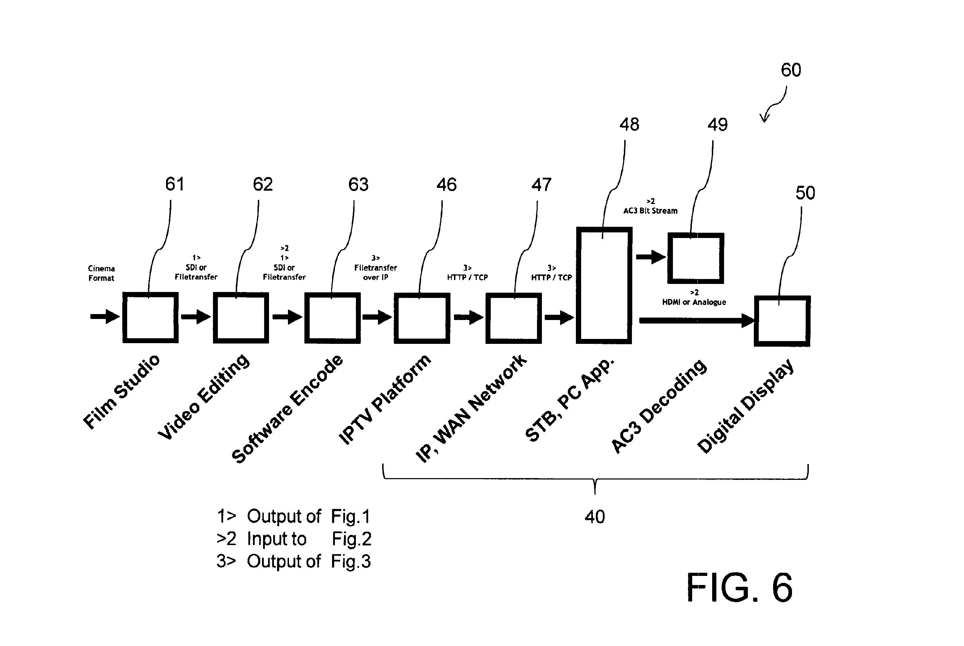

The live calibration audio/video stream generator 1 further comprises a reference audio/video clock generator 19, which provides a common timing reference signal to the receiver 11, the PAL-decoder 13, the SDI-frame synchronizer 17 and the SDI-multiplexer 18 for minimizing the delay between the synchronization signals of the audio and video signal within the calibration audio/video stream. An AES Audio reference of the generator 19 is also used by the AC3-stage 14 as timing reference. The overall accuracy of the synchronization signals of the audio and video signal within the SDI Test Signal stream, which is achieved with the live calibration audio/video stream generator 1 according to this embodiment, is ± 1 ms over several days without any drift. The SDI Test Signal stream is provided to all the SDI live TV stages under test, as described later in detail with respect to Figs. 4 and 6.

The detailed components of the calibration audio/video stream generator 1 are listed below.

DVB-S Receiver 11:
IRD Tandberg TT1260
Sl1493 Motherboard
1085 TT1280 S2 Input VO
1071 TT1260 CA module
1070 TT1260 Decoder Module

Impulse Generator 12:
CALREC LipStick

PAL Decoder 13:
Snell & Wilcox IQ DEC0115-1A

SDI Multiplexer 18:
Snell & Wilcox IQ MUX0101-1A

SDI Frame Synchronizer 17:
Snell & Wilcox IQ SYN2126-1A

Modular Chassis Control Software:
Snell & Wilcox IQ H1A-S-P 1RU / RollNet

AC3 Encoder 15:
Dolby DP569

AC3-framesynchronizer 16:
Dolby DP583

PAL Reference Generator 19:
Lynx Testor P TG 3610 B

Used Multimedia Cable:
DRAKA 0.6/2.8 AF - 75Q ±1.1%

The evaluation unit 2 in this embodiment, as shown in Figure 2, comprises an SDI / AES Demultiplexer 21, which receives an SDI-signal containing the audio and video signal with the synchronization signals as input. The SDI / AES Demultiplexer 21 de-capsulates the SDI embedded AES2 Group2 audio 2 pair 2 with the AC3-bitstream to AES 2 Out. Additionally, it provides an AES output for selectable monitoring and controlling header data of either audio pair 1 or audio pair 2. The video signal with the audio pair 1 will be forwarded transparently out of SDI Out.

The evaluation unit 2 further comprises a SDI PAL-encoder 22, which de-serializes and converts the serial audio video signal, which is still a digital signal, into an analog video signal in PAL composite format and to analog audio signals. The SDI PAL-encoder 22 performs the task of a set-top box, which is usually provided to an end user. In case the set-top box is part of a live TV-chain 51 or a VoD IPTV-chain 60, for which the delay to the audio and the video signal is evaluated, such a standard set-top box can be used in the evaluation unit 2.

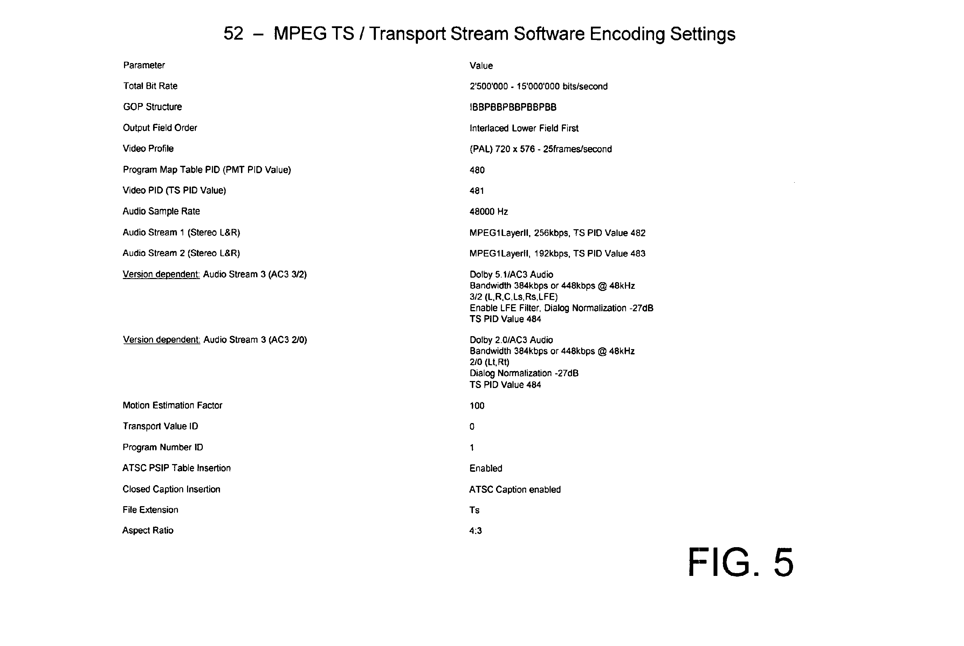

The evaluation unit 2 further comprises a monitoring device 23, also referred to as Pair 1 / 2 Meter, for displaying parameters of the audio signal received from the selectable AES 1 / 2 output to control the AC3 metadata content which is delay dependant for audio pair 2, or the PCM coding parameters on audio pair 1 of the SDI stream at input 21. This information is suitable in case the evaluated delay depends on the contents of the audio/video stream or the audio/video parameters of the stream. An exemplary output of the monitoring device 23 is shown in Fig. 5 representing parameters of Audio Stream 3.

The evaluation unit 2 further comprises an AC3-decoder 24, which receives the AES-signal in AC3-format and performs a Dolby reference AC3-decoding for any selectable AC3 format configured in 15. The AC3-decoder provides two analog channels as output. For AC3 2/0 coding the left channel 1 (Lt) will provide the synchronization impulse. For AC3 3/2 coding (5.1) the centre channel (C) will be decoded and routed to the analog output 1 for synchronization. Compared to variable and un-constant AC3-decoding in a consumer Dolby Chipsets (IPTV set-top-box with variable delays from -4ms to -10ms) the used reference AC3-decoder 24 provided by Dolby is able to decode any AC3 format with a constant delay software setting of -32ms. Together with the AC3-framesynchronizer 16 which is configured with a constant setting of -48ms the delay can be compensated for the reference setup with 2 PAL frames (+80ms).

The evaluation unit 2 further comprises a calculation unit 25, also referred to as impulse receiver, which receives the composite video signal and the left channel from the audio pair 1 from the SDI PAL-encoder 22 and the left channel (Ch 1) from the analog audio channels of the AC3-decoder 24. The calculation unit 25 evaluates the synchronization signals of the video signal and the audio signals and calculates a time delay between the synchronization signals. The time delay is calculated between the video signal and the audio signal provided by the SDI PAL-encoder 22 and between the video signal provided by the SDI PAL-encoder 22 and the audio signals provided by the AC3-decoder 24.

The detected time delays are provided to a software logging application installed on a PC 26, which receives all decoded delay data via an RS232 interface and stores the time delays information for a time interval every 10 seconds with a NTP Timestamp header, e.g. time intervals of hours or days can be chosen by the operator to detect long term signal drift for two independent coded audio streams in relation to video. CSV Database export of the measured values is provided by the software application running on PC 26 for further analysis and graphical presentation. In this reference calibration embodiment, a constant time delay value of +-2ms without any drift over 48 hours can be measured after setting up the all parameters. Accordingly, while hardware device or provider IPTV stage under test, the deviation of this reference setup or a drift over time can be detected and be considered for compensation within the live TV-chain 51 or the VoD IPTV-chain 60.

The detailed components of the evaluation unit 2 are listed below.

SDI / AES Demultiplexer 21:
Snell & Wilcox IQ DMX0101-1A

SDI PAL Encoder 22:
Snell & Wilcox IQ DAVM-1-D

Modular Chassis Control Software:
Snell & Wilcox IQ H1A-S-P 1RU / RollNet

Pair 1 / 2 Meter 23:
Dolby LM100 - AC3 / AES Loudness & Metadata Metering

AC3 Decoder 24:
Dolby DP562

Impulse Receiver 25:
CALREC LipStick
Decoder Board Development and Modifications by Max Mannhart Engineering & Patrick Schneider

PC 26 with application:
CALREC LipStick Data Logging System Interface; Windows x86 realtime Logging Software Application, Max Mannhart Engineering

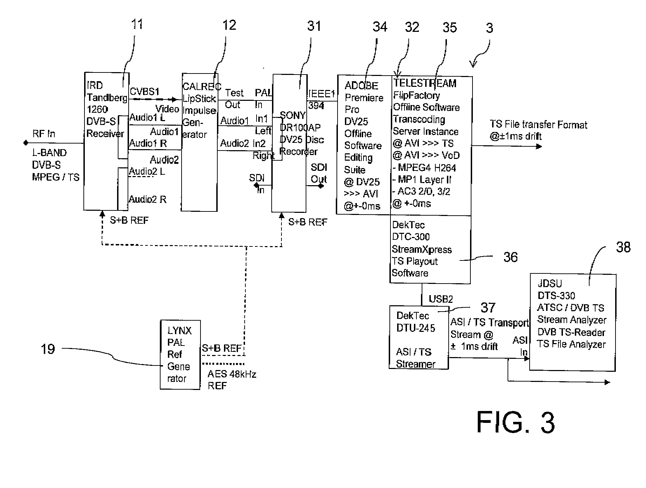

A second embodiment of the invention will now be described with respect to Fig. 3.

The measurement system according to this embodiment comprises a VoD calibration audio/video stream generator 3, which is sown in detail in Figure 3.

The VoD calibration audio/video stream generator 3 comprises a receiver 11 and an impulse generator 12 as described before with respect to Fig. 1 of the first embodiment.

The VoD calibration audio/video stream generator 3 further comprises a professional Sony DVCAM video disc recorder 31. The calibration audio/video signal provided by the generator 12 will be recorded in a highly timing stable compressed audio/video format DVCAM DV25.

The VoD calibration audio/video stream generator 3 further comprises a reference audio/video clock generator 19, which is identical to the clock generator 19 of the first embodiment. The receiver 11, the impulse generator 12 and the video disc recorder 31 are connected and synchronized to the reference audio/video clock generator 19.

To ensure a delay free recording and playback of the disc recorder 31, the disc recorder 31 can be tested by use of the calibration audio/video stream generator 1 and the evaluation unit 2 according to the first embodiment on the SDI input and output.

The pre-recorded material will be copied via firewire IEEE1394 to a computer system 32. The computer system 32 includes a offline software video editing suite 34, an offline software transcoding server instance 35, and a TS playout software 36.

The offline software video editing suite 34 is used to edit the calibration audio/video signal for provider custom needs with full integrity of the lip-synchronization information. The edited material needed for the test will be exported into a final source file before transcoding. These files are processed by the offline software transcoding server instance 35 to create high precision drift-free custom transport stream data encapsulated structures with an accuracy of +-1ms, similar to real IPTV platform stream data including custom selectable bandwidth, programs and Dolby AC3 bit streams (Audio Stream 3), as shown in detail in Fig. 5.

These software generated transport stream files are used for measurement of time delays between audio and video signals of a VoD IPTV chain, as shown in Fig 6.

Accordingly, the VoD calibration audio/video stream generator 3 uses the TS playout software 36 running on the computer system 32 to playback the calibration audio/video stream. This signal is provided to an ASI / TS streamer 37 to generate an high precision ASI stream while playing any custom pre-generated lip-synchronization transport stream data structure set. This ASI / TS streamer 37 also allows testing an IPTV head-end signal entry at the IRD input under Fig. 4 as input. The ASI stream played out by the ASI / TS streamer 37 will be monitored in real time by a TS stream analyzer 38. The software generated transport stream files are monitored by a DVB TS Reader and a TS file analyzer software application which is part of the TS stream analyzer 38.

The detailed components of the calibration audio/video stream generator 3 of the second embodiment are listed below.

DVB-S Receiver 11:
IRD Tandberg TT1260
S11493 Motherboard
1085 TT1280 S2 Input VO
1071 TT1260 CA module
1070 TT1260 Decoder Module

Impulse Generator 12:
CALREC LipStick

PAL Reference Generator 19:
Lynx Testor P TG 3610 B

Disc Recorder 31:
SONY DR100AP (DVCAM)

Offline Software Video Editing Suite 34:
Adobe Premiere Pro (DV25)

Offline Software Transcoding Server Instance 35: Telestream FlipFactory
SQL Server, Windows Server 2003

TS Playout Software 36:
DekTec DTC-300 StreamXpress Application

ASI / TS Streamer 37:
DekTec DTU-245 USB Fantasi Interface

TS Stream Analyzer 38:
JDSU DTS-330 ATSC/DVB TS stream analyzer
DVB TS Reader software

Used Multimedia Cable:
DRAKA 0.6/2.8 AF - 75Q ±1.1%

An evaluation unit 2 according to the second embodiment is not explicitly shown in the figures. The evaluation unit 2 is identical to the evaluation unit 2 of the first embodiment.

In an alternate embodiment, the evaluation unit 2 receives an SDI Test Signal Input, where the audio signal is not AC3 encoded. Accordingly, the evaluation unit 2 according to this alternate embodiment does not comprise equipment for dealing with AC3 signals, i.e. the evaluation unit 2 according to this alternate embodiment does not comprise a monitoring device 23 and an AC3-decoder 24. A calculation unit 25 of this alternate embodiment only receives inputs from the PAL-encoder 22 and calculates a time delay between the video signal and the audio signal provided by the PAL-encoder 22.

The audio/video delivery chain 40 for the live TV-chain 51 is shown in Fig. 4. The TV-chain 51 is the end-to-end chain for provisioning the live audio/video stream to a user and covers the provisioning of IPTV.

The live TV-chain 51 will now be described and typical values for delays of each component are listed. Delays are positive in case the video signal is delayed that to the audio signal, whereas a negative value indicates that the audio signal is delayed compared to the video signal.

The live TV-chain 51 starts with the live production or recording of the audio and video signal in the TV-studio 41. Typically, a delay of +18 to -20 ms is considered as best practice and can occur in the TV-studio 41 because of an uncontrollable video field delay.

The TV-studio 41 is followed by a link stage 42. In this link stage 42, typical time delays of ± 20 ms occur due to fact that a field delay to audio or video can be added during signal reception and re-transmission or further live contribution.

Subsequently, an integrated receiver decoder (IRD) 43, a processing stage 44 comprising audio levelling, video signal legalization and SDI-switching, and an encoding stage 45 for live video encoding form part of the live TV-chain 51. Particularly, the computationally intensive encoding stage 45 and the integrated receiver decoder 43 can add delays of up to +30 ms and -140 ms to the live signal, each depending on the device settings and IPTV head-end engineering. The processing stage 44 performs all pre-processing on the audio or video signal. During pre-processing the audio and video signals will be processed independently from each other. The processing stage 44 can cause a delay between the audio and video content of up to +-10ms.

Subsequently, the main IPTV-server platform stage 46 followed by an IP, WAN Network 47 form part of the live TV-chain 51. Depending on the IPTV-Server platform, an additional delay of +-40 ms can be expected. These delays are caused by the scrambling processes and during final encapsulation of the audio video content with all additional IPTV program data into a delivery transport stream.

The transport stream integrity and the impairments caused by the IP, WAN Network 47 can be controlled and monitored by an analyzer as the TS transport Stream analyzer 38 of the second embodiment. Measurements performed by the ATSC/DVB TS transport stream analyzer 38 can assure that the decoding of the lip-synchronization test signal is not influenced by the IP, WAN Network 47 and that all portions of the transport stream (TS Sync, PAT, Continuous Counter, PMT-PID structure, PCR etc...) are transmitted properly. The IP, WAN Network 47 does not add a delay to audio/video within one and the same transport stream, since the final encapsulation process is completed by the IPTV-server platform and the audio video synchronization stays untouched in the Layer 4 transport PDU (Protocol Data Unit).

At the end of the live TV-chain 51, a set-top box reception or PC Application (STB, PC App.) 48 is provided. The set-top box 48 is the least professional component in the chain and can add the greatest additional delay of + 40ms to - 280 ms.

The end-to-end live TV-chain 51 further comprises a Dolby AC3-decoding stage 49, which adds a further delay of -4 ms to - 10 ms depending on the provided format 2/0 or 3/2 and on the encoded AC3 bandwidth.

The live TV-chain 51 further comprises in some cases a digital display 50, which adds an additional delay of + 20 ms to + 60 ms for the viewer.

The audio/video stream delivery chain 40, which can be evaluated regarding a delay between audio and video signal with the measurement system and method according to the first embodiment covers the chain from the integrated receiver decoder 43 up to the digital display 50. Also, smaller parts of the live TV-chain 51 can be considered as audio/video stream delivery chain 40 for evaluation with any of the measurement systems described above.

The audio/video delivery chain 40 for the VoD IPTV-chain 60 is shown in Fig. 6. The VoD IPTV-chain 60 is the end-to-end chain for provisioning the VoD audio/video stream to a user and covers the provisioning of IPTV.

The VoD IPTV-chain 60 starts with a film studio 61, which provisions the sources for the VoD-service. A further video editing stage 62 and a software encoding stage 63 follow.

Subsequently, a main IPTV-server platform stage 46 is followed by an IP, WAN Network 47 form part of the VoD IPTV-chain 60. The main IPTV-server platform stage 46 and the IP, WAN Network 47 are identical to the respective components of the live TV-chain 51 as described above. The transport stream integrity and the impairments caused by the IP, WAN Network 47 can be controlled and monitored by an analyzer as the TS transport Stream analyzer 38 of the second embodiment, as already described before.

At the end of the VoD IPTV-chain 60, a set-top box reception or PC Application (STB, PC App.) 48 is provided. The end-to-end VoD IPTV-chain 60 further comprises a Dolby AC3-decoding stage 49 and a digital display 50. Also the set-top box reception or PC Application (STB, PC App.) 48, the Dolby AC3-decoding stage 49, and the digital display 50 are identical to the respective components of the live TV-chain 51 as described above.

The audio/video stream delivery chain 40, which can be evaluated regarding a delay between audio and video signal with the measurement system and method according to the second embodiment, covers the chain from the IPTV-server platform stage 46 up to the digital display 50. Also, smaller parts of the VoD IPTV-chain 60 can be considered as audio/video stream delivery chain 40 for evaluation with any of the measurement systems described above.

## Claims

1. Method for evaluating a delay between an audio signal and a video signal in an audio/video stream delivery chain (40) comprising the steps of
providing a calibration audio/video stream with synchronization signals within the audio signal and the video signal,
transmitting the calibration audio/video stream through the audio/video stream delivery chain (40),
receiving the calibration audio/video stream and calculating a time delay value of the synchronization signals within the audio signal and the video signal of the received audio/video stream.

2. Method according to preceding claim 1,
**characterized in that**
the step of providing a calibration audio/video stream with synchronization signals within the audio signal and the video signal comprises
providing an analog audio signal and an analog video signal,
providing the synchronization signals to the analog audio signal and the analog video signal, and
converting the analog audio signal and the analog video signal containing the synchronization signals into a digital audio signal and a digital video signal.

3. Method according to any of preceding claims 1 or 2,
**characterized in that**
the step of receiving the calibration audio/video stream comprises converting the calibration audio/video stream into an analog audio signal and an analog video signal, and
the step of calculating a time delay value of the synchronization signals comprises calculating the time delay value of the synchronization signals within the analog audio signal and the analog video signal.

4. Method according to any preceding claim,
**characterized in that**
the step of providing a calibration audio/video stream with synchronization signals within the audio signal comprises adding sound identification pulses to the audio signal.

5. Method according to any preceding claim,
**characterized in that**
the step of providing a calibration audio/video stream with synchronization signals within the video signal comprises adding flashes to the video signal.

6. Method according to preceding claim 5,
**characterized in that**
the step of adding flashes to the video signal comprises adding flashes to a predefined set of lines of the video signal.

7. Method according to preceding claim 6,
**characterized in that**
the step of adding flashes to a predefined set of lines of the video signal comprises adding enclosing signals, which are distinct from the flashes, within an area surrounding the flash.

8. Method according to any preceding claim,
**characterized in that**
the step of providing a calibration audio/video stream with synchronization signals within the audio signal and the video signal comprises providing any audio and video input signal and adding synchronization signals to the audio signal and the video signal.

9. Method according to any preceding claim,
**characterized in that**
the step of providing a calibration audio/video stream with synchronization signals within the audio signal and the video signal comprises reproducing a pre-recorded calibration audio/video stream.

10. Method according to any preceding claim,
**characterized in that**
the step of providing a calibration audio/video stream with synchronization signals within the audio signal and the video signal comprises providing the calibration audio/video stream having at least two sequences, whereby each sequence has a different set of audio/video parameters.

11. Method according to any preceding claim,
**characterized in that**
the step of providing a calibration audio/video stream with synchronization signals within the audio signal comprises performing a separate encoding of the audio signal containing the synchronization signal and delaying the video signal containing the synchronization signal by a delay caused by the separate audio encoding, and
the step of calculating a time delay value of the synchronization signals within the audio signal and the video signal of the received audio/video stream comprises performing a separate decoding of the audio signal containing the synchronization signal, whereby the time delay value is calculated considering the delay caused by the audio decoding.

12. Method according to any preceding claim,
**characterized in that**
the step of calculating a time delay value of the synchronization signals within the audio signal and the video signal of the received audio/video stream comprises calculating and recording the time delay over a time interval and calculating the time delay value from the recorded time delays over the time interval.

13. Measurement system for evaluating a delay between an audio signal and a video signal in an audio/video stream delivery chain (40) comprising
a calibration audio/video stream generator (1, 3) for providing a calibration audio/video stream with synchronization signals within the audio signal and the video signal, connectable to the audio/video stream delivery chain (40),
an evaluation unit (2), connectable to the audio/video stream delivery chain (40), for receiving the calibration audio/video stream and calculating a time delay value of the synchronization signals within the audio signal and the video signal of the received audio/video stream,
whereby the measurement system is adapted to perform the method according to any of preceding method claims 1 to 12.

14. Calibration audio/video stream generator (1, 3) for providing a calibration audio/video stream with synchronization signals within an audio signal and a video signal thereof, whereby
the calibration audio/video stream generator (1, 3) is adapted to be connected to an audio/video stream delivery chain (40), and
the calibration audio/video stream is provided to be received by an evaluation unit to calculate a time delay value of the synchronization signals within the audio signal and the video signal of the received audio/video stream.

15. Evaluation unit (2) for receiving a calibration audio/video stream and calculating a time delay value of synchronization signals within an audio signal and a video signal thereof, whereby
the evaluation unit (2) is adapted to be connected to an audio/video stream delivery chain (40) for receiving the calibration audio/video stream, and
the calibration audio/video stream is providable by a calibration audio/video stream generator (1, 3) for providing the calibration audio/video stream with synchronization signals within the audio signal and the video signal, and transmittable through the audio/video stream delivery chain (40).
